# EUROPEAN PATENT APPLICATION

(11) **EP 2 993 074 A1**
(43) Date of publication of application: **09.03.2016**
(21) Application number: 15179599.4
(22) Date of filing: 04.08.2015
(51) Int. Cl.: B60L 11/18, H02J 7/00

(54) **BATTERY PACK AND HYBRID VEHICLE INCLUDING THE BATTERY PACK**

(30) Priority: 02.09.2014 KR 20140116048
(71) Applicant: LSIS Co., Ltd., Anyang-si, Gyeonggi-do 431-848 (KR)
(72) Inventor: JANG, Jae Hoon, 431-080 Anyang-si, Gyeonggi-do (KR)
(74) Representative: Lang, Johannes

(57) **Abstract**

A battery pack includes a main battery including a plurality of battery cells, a power conversion unit configured to change a level of a voltage output from the main battery, a main relay unit disposed between the main battery and the power conversion unit, the main relay unit switching a connection between the main battery and the power conversion unit, and a control unit configured to monitor a state of the main battery and control operation of the power conversion unit, wherein the control unit includes units for measuring voltage, current and temperature values of the main battery and a unit for outputting a gate signal for controlling the operation of the power conversion unit.

## Description

### BACKGROUND

The present disclosure relates to a battery pack that is an energy storage device for use in a hybrid vehicle, and particularly, to a battery pack including a high-capacity 48V battery.

In general, vehicles with internal combustion engines which use gasoline or diesel as main fuels seriously cause pollution such as air pollution. Therefore, efforts have recently been made to develop electric vehicles or hybrid vehicles to reduce pollution.

Electric vehicles employ a battery engine operated by electric energy output from a battery. Such electric vehicles use a battery pack in which a plurality of rechargeable secondary batteries are arranged in a single pack as a main power source, and thus do not generate exhaust gas and make a very low noise.

Hybrid vehicles employ at least two power sources, for example, an internal engine and an actuator operated with a battery. Mixed-type hybrid vehicles are currently developed. Such mixed-type hybrid vehicles employ an internal combustion engine and a fuel cell for obtaining electric energy by continuously supplying hydrogen and oxygen and inducing chemical reaction, or employ a battery and a fuel cell.

A battery power supply device included in such an electric vehicle or a hybrid vehicle is a power source for providing energy to a related electronic device and an actuator and includes a multi-cell battery. By using a multi-cell pack rather than a single-cell pack, a high voltage may be applied or a capacity may be increased.

In a hybrid vehicle, electronic loads such as telematics, ISG, a motor-driven steering wheel and the like require more power from a 12V battery, but a convention 12V battery system may not satisfy such an increased power requirement. To overcome such a limitation, a 48V system for implementing a hybrid vehicle system with low cost has been suggested as an alternative, and researches are conducted to develop 48V-rated electronic loads for replacing electronic loads that consume excessive power.

For example, a 48V system may be used for high loads such as a belted starter generator (BSG), an air conditioner, a motor-driven steering wheel and the like, and a 12V system may be used for electronic loads such as an audio, a display, a lamp and the like.

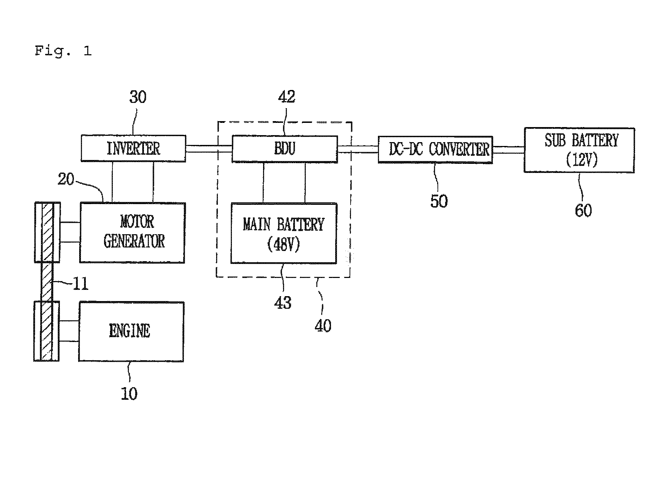

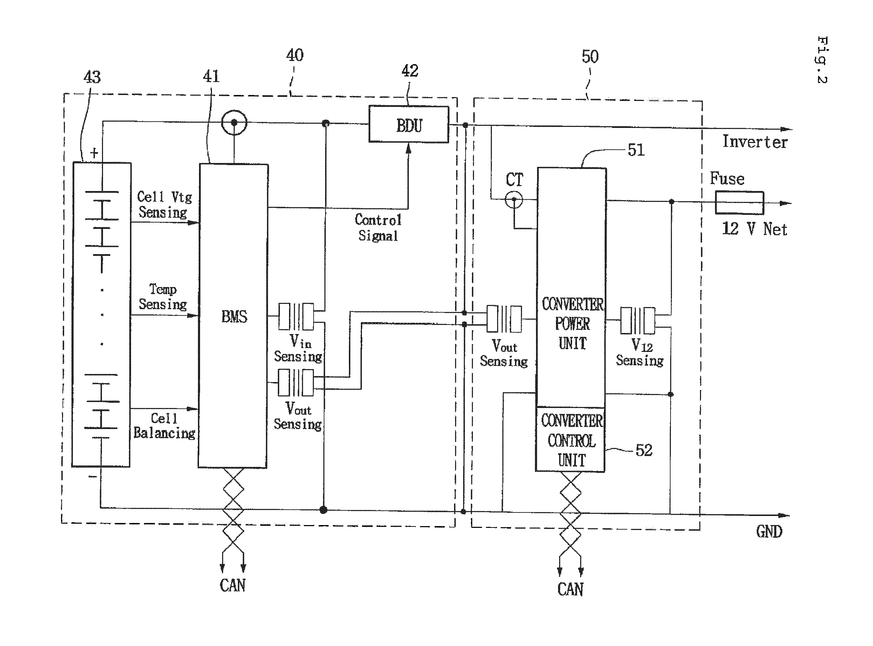

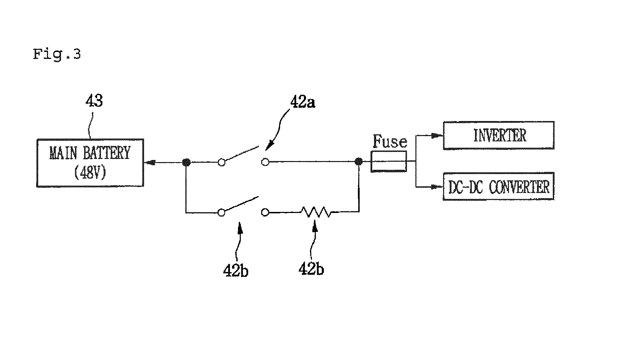

Figs. 1 and 2 are diagrams illustrating a configuration of a conventional hybrid vehicle, and Fig. 3 is a diagram illustrating a conventional precharge relay.

Referring to Fig. 1, a battery system of a conventional hybrid vehicle includes a motor generator 20 for transmitting power to an engine 10 through a pulley 11 or converting power generated in the engine 10 into electric energy, and an inverter 30 for supplying electric energy to the motor generator 20 or converting energy transferred from the motor generator 20 into electric energy to transfer the electric energy to a main battery pack 40.

The motor generator 20 corresponds to an IGS which is installed between an engine and a transmission to control turning on/off of an ignition of the engine and a starting torque required for a drive, operates as a generator at the time of normal operation of a vehicle, and collects regenerative braking energy at the time of driving a brake.

Furthermore, the conventional battery system includes a sub battery 60 and a DC-DC converter 50 for boosting or dropping a voltage between the main battery pack 40 and the sub battery 60.

In detail, as illustrated in Fig. 2, the main battery pack 40 includes a battery management system (BMS) 41 as a main battery control unit for sensing a battery state of the vehicle and controlling battery operation.

The BMS 41 senses information on the battery state of a vehicle system, controls circuits for charging/discharging a battery, and includes a control power supply unit, a plurality of sensing units, a main microcomputer, and a backup microcomputer.

For example, the BMS 41 is provided with a cell balancing circuit for measuring a voltage of each battery cell included in a main battery 43 to equalize voltages between battery cells, and temperature sensors for measuring the temperatures of the battery cells and the battery pack 40.

Furthermore, the BMS 41 is provided with sensing circuits for measuring input/output voltages and currents, a communication module such as a CAN, a LIN, or the like for in-vehicle communication, and an ASIC for monitoring a temperature of each location of the system and performing cell balancing.

In addition, the BMS 41 includes a main microcomputer for controlling circuits and sensors, a backup microcomputer (DSP) for use in an emergency such as failure of the main microcomputer or for processing an auxiliary operation, and a switching mode power system (SMPS) for generating, from a 12V auxiliary battery, control power to be supplied to each circuit and sensor.

As described above, in order to use electric energy as an energy source of a vehicle, a plurality of circuits and sensors and microcomputers for managing the circuits and sensors should be provided for stable operation and protection of elements.

The BMS 41 controls a battery disconnect unit (BDU) 42 corresponding to a main relay for switching a connection between the vehicle system and the main battery 43. The BDU 42 will be described in more detail with reference to Fig. 3.

According to the related art, the DC-DC converter 50 is physically separated from the main battery pack 40 and is disposed between the main battery pack 40 and the sub battery 60. The DC-DC converter 50 includes a converter power unit 51 and a converter control unit 52.

The converter power unit 51 includes a circuit for boosting or dropping a DC voltage according to a gate signal transferred from the converter control unit 52.

Like the above-mentioned BMS, the converter control unit 52 includes a microcomputer for stable operation and protection of a plurality of circuits and sensors included therein.

In detail, like the above-mentioned BMS provided with a plurality of circuits and sensors, the converter control unit 52 should be provided with a microcomputer for performing various control operations, a PWM controller for controlling required power elements (an FET, an IGBT, and the like) in a DC-DC converter, and a gate driver circuit, and is provided with a communication module for performing CAN communication with another device in the vehicle, an NTC circuit for sensing a temperature of each required area, and a sensing circuit for measuring input/output voltage/current and a current of each phase.

Furthermore, the converter control unit 52 should be provided with protection circuits for protecting each circuit and sensor in the DC-DC converter 50 from overvoltage, overcurrent, and high temperature, and an SMPS for supplying control power to each circuit element.

As described above, for a conventional vehicle that uses electric energy as a power source, not only the battery pack 40 but also the DC-DC converter 50 should be provided with a large number of sensors, units for reading sensed values, and circuits for controlling and protecting the foregoing elements. Therefore, a large number of wires are complicatedly connected, and a cooling structure for dissipating heat generated from the main battery pack 40 and a cooling structure for dissipating heat generated from the DC-DC converter 50 should be individually provided.

Furthermore, the precharge relay as illustrated in Fig. 3 should be provided in order to prevent a high current from rapidly flowing to the vehicle system if the main battery 43 is immediately connected to the vehicle system when the vehicle is initially started.

That is, according to the related art, a contactor 42a for turning on/off the main battery 43, a precharge relay 42b connected in parallel to the contactor 42a, a precharge resistor 42c, and a fuse for protecting the entire system are arranged between the main battery 43 and the inverter 30 and between the main battery 43 and the DC-DC converter 50.

If the contactor 42a corresponding to a main relay is immediately connected when the vehicle is started, a rapid current flow, i.e., a high current due to a temporary short circuit of a battery causes a relay fusion phenomenon, which may seriously damage the vehicle system (e.g., an inverter smoothing capacitor or the like). To overcome such a limitation, at the time of initial starting, while the contactor 42a is turned off, the precharge relay 42b is turned on, and an intensity of a current that flows through the precharge resistor 42c connected to the precharge relay 42b is limited. Here, since the intensity of a flowing current varies with a resistor size, the specifications of the precharge relay are determined on the basis of the intensity of the flowing current.

According to the above-mentioned conventional vehicle system, each of the main battery pack and the DC-DC converter should be provided with a large number of sensors and circuits, and wires are required for connecting the sensor and circuits. Therefore, not only the cost of a vehicle battery system but also the weight of a vehicle is increased.

Furthermore, a cooling structure for decreasing a temperature should be provided to each of the main battery pack and the DC-DC converter, and an additional precharge relay should be provided for stable system operation.

### SUMMARY

Embodiments provide a battery pack for integrating a battery pack, a BDU, a BMS and a DC-DC converter required for a 48V hybrid vehicle so that sensors and circuits required for stable system operation are used in common, and a hybrid vehicle including the battery pack.

Embodiments also provide a battery pack for reducing a manufacturing cost by employing such a single system device and for reducing the cost and the weight of a vehicle by reducing wires connected to various circuits and sensors, and a hybrid vehicle including the battery pack.

In one embodiment, a battery pack includes a main battery including a plurality of battery cells, a power conversion unit configured to change a level of a voltage output from the main battery, a main relay unit disposed between the main battery and the power conversion unit, the main relay unit switching a connection between the main battery and the power conversion unit, and a control unit configured to monitor a state of the main battery and control operation of the power conversion unit, wherein the control unit includes units for measuring voltage, current and temperature values of the main battery and a unit for outputting a gate signal for controlling the operation of the power conversion unit.

In another embodiment, a hybrid vehicle includes a main battery, an inverter configured to operate as a generator or collect and energy-convert regenerative braking energy generated from an engine of the vehicle so that the main battery is charged according to a driving state of the vehicle, a power conversion unit configured to provide power to a first electronic load that is a high-capacity load element among electronic loads, and connected to the main battery and the inverter, a sub battery connected to the power conversion unit, and configured to provide power to a second electronic load that is a standard-capacity load element among the electronic loads, a control unit configured to monitor a state of the main battery and control operation of the power conversion unit, and a main relay unit disposed between the main battery and the power conversion unit, and configured to selectively connect the main battery to the power conversion unit according to control by the control unit, wherein, in order to precharge a capacitor disposed in the first electronic load or the inverter, the control unit controls the power conversion unit so that power of the sub battery is provided to the capacitor.

The details of one or more embodiments are set forth in the accompanying drawings and the description below. Other features will be apparent from the description and drawings, and from the claims.

### BRIEF DESCRIPTION OF THE DRAWINGS

Figs. 1 and 2 are diagrams illustrating a configuration of a conventional hybrid vehicle.
Fig. 3 is a diagram illustrating a conventional precharge relay.
Fig. 4 is a diagram illustrating a configuration of a battery pack according to an embodiment.
Fig. 5 is a diagram illustrating a detailed configuration of a control unit included in a battery pack according to an embodiment.
Fig. 6 is a flowchart illustrating a method for performing a precharge operation in a battery pack according to an embodiment.

### DETAILED DESCRIPTION OF THE EMBODIMENTS

Reference will now be made in detail to the embodiments of the present disclosure, examples of which are illustrated in the accompanying drawings.

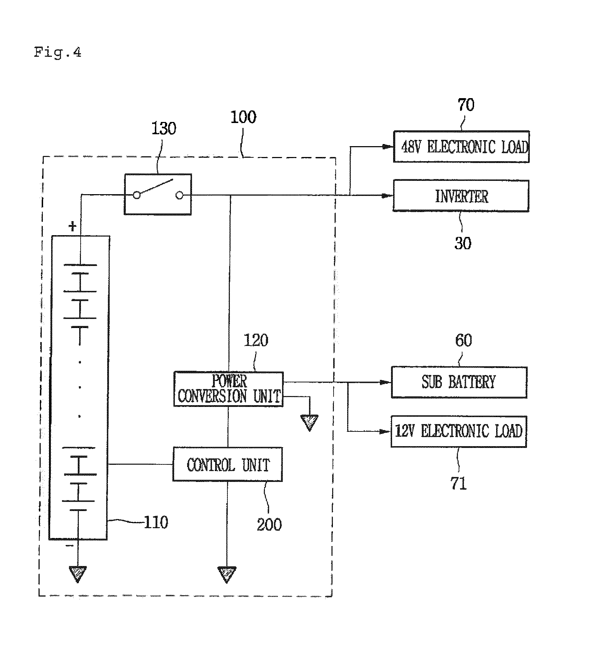

Fig. 4 is a diagram illustrating a configuration of a battery pack according to an embodiment.

A battery pack 100 includes a main battery 110 including a plurality of battery cells, a main relay unit 130 for controlling connection of the main battery 110, a control unit 200 for checking battery state information and controlling charging/discharging of a battery, and a power conversion unit 120 for changing a level of a DC voltage.

One end of each of the main battery 110, the control unit 200, and the power conversion unit 120 may be connected to a ground. The power conversion unit 120 is separable from the ground.

The power conversion unit 120 is connected to a sub battery 60 and a 12V electronic load 71.

The control unit 200 performs operations of conventional BMS, BDU, and converter control unit for controlling a DC-DC converter as a single unit, checks the state information of the battery, and controls charging/discharging of the battery.

The control unit 200 controls operation of the power conversion unit 120 so as to precharge capacitors included in an inverter 30 for energy-converting electric energy so that the energy is used as a power source of a vehicle and a high-voltage electric load 70 connected to the battery back 100. Furthermore, the control unit 200 may control operation of a main relay unit. A configuration and operation of the control unit 200 will be described in more detail with reference to the accompanying drawings.

The power conversion unit 120 serves as a power unit of a DC-DC converter for boosting a DC voltage to a higher voltage or dropping the DC voltage to a lower voltage according to a gate signal transferred from the control unit 200.

The main relay unit 130 serves to control a connection of the main battery 110 to the power conversion unit 120, the 48V electronic load 70 and the inverter 30, and may include a switching circuit. According to the related art, a main relay unit requires a resistor and a relay for performing a precharge function, whereas, according to an embodiment, a resistor and a relay for a precharge function are not required for the main relay unit 130 since a required precharge operation may be performed according to operation of the power conversion unit 120.

The main battery 110 may be a high-voltage 48V battery, and may have a structure in which a plurality of battery cells are connected in series.

In particular, according to an embodiment, elements of a main battery, such as a BMS, a BDU, and the like, and a converter microcomputer for controlling a DC-DC converter are integrated, so that monitoring and management control of a vehicle battery may be performed by the single control unit 200.

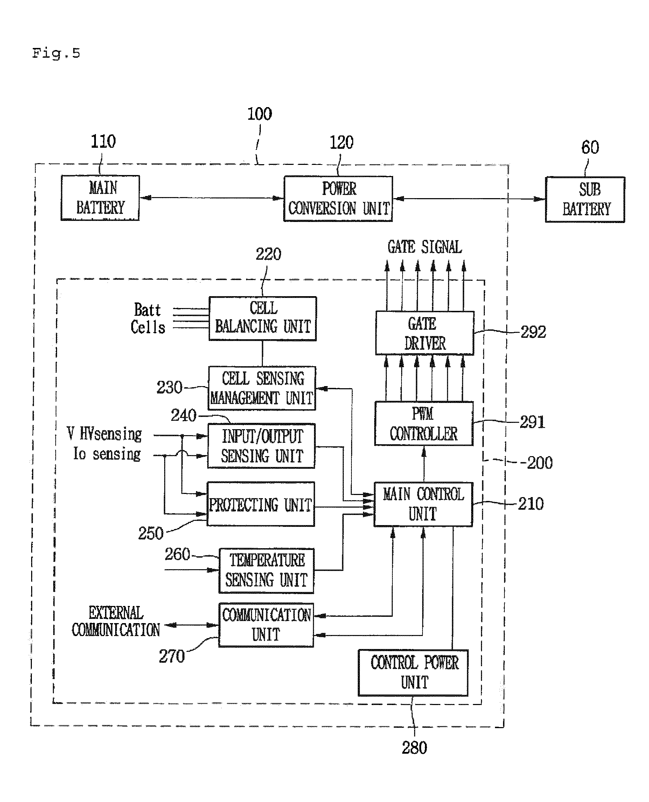

A configuration of the control unit 200 will be described with reference to Fig. 5.

Fig. 5 is a diagram illustrating a detailed configuration of a control unit included in a battery pack according to an embodiment.

Referring to Fig. 5, as described above, the battery pack 100 includes the main battery 110, the power conversion unit 120 selectively connected to the main battery 110 through a relay circuit, and the control unit 200 for monitoring or controlling operation of the main battery 110 and the power conversion unit 120.

Furthermore, the control unit 200 integrally manages/controls various sensors and monitoring circuits required by a control unit for performing state monitoring and controlling on the main battery 110 and various sensors and monitoring circuits required by a converter control unit of a DC-DC converter.

In detail, the control unit 200 includes a cell balancing unit 220, a cell sensing management unit 230, an input/output sensing unit 240, a protecting unit 250 that is a protection circuit, a temperature sensing unit 260, a communication unit 270, and a main control unit 210 for controlling the foregoing elements.

The control unit 200 may further include a PWM controller 291 for controlling a PWM duty ratio according to control by the main control unit 210, and a gate driver 292 for outputting a gate signal according to the PWM duty ratio output from the PWM controller 291, but may not necessarily include these elements according to an embodiment.

The gate signal output from the control unit 200, more specifically, output from the gate driver 292 is transferred to the power conversion unit 120, and the power conversion unit 120 serves as a power unit for boosting or dropping a DC voltage according to the gate signal.

The cell balancing unit 220 included in the control unit 200 serves to reduce a voltage deviation between battery cells of the main battery 220 to improve performance and durability life of a battery. If the main battery is used while the battery cells have a voltage deviation, some battery cells are used with different efficiency in another voltage region, which facilitates degradation of specific battery cells and thus affects a life of the entire battery pack. Therefore, cell balancing is required for reducing a voltage deviation between battery cells.

The cell sensing management unit 230 included in the control unit 200, which is an application-specific integrated circuit (ASIC) for cell sensing, receives a voltage value, a current value, and a temperature value of each battery cell, converts the received analog data into digital data, and then transfers the digital data to the main control unit 210.

The input/output sensing unit 240 included in the control unit 200 serves to sense an input/output voltage/current and a temperature of the main battery 110.

The protecting unit 250 determines whether an overvoltage is generated, whether an overcurrent is generated, whether a low voltage is generated and whether a protection temperature range is exceeded on the basis of values measured by the input/output sensing unit 240, and prevents the overvoltage or the overcurrent from being introduced into a circuit of the vehicle system to protect the circuit of the vehicle system, or transfers relevant information to a user when the low voltage is generated.

The temperature sensing unit 260 included in the control unit 200 serves to measure a temperature of the battery pack using a temperature detecting element. The communication unit 270 serves to transmit/receive data so that CAN or LIN communication is performed between an ECU of the vehicle or another element and the main control unit 210.

A control power unit 280 included in the control unit 200 serves to supply power required for operating the cell balancing unit 220, the cell sensing management unit 230, the input/output sensing unit 240, the protecting unit 250, the temperature sensing unit 260, the communication unit 270, the main control unit 210, the PWM controller 291, and the gate driver 292.

As described above, the control unit 200 may be disposed in the battery pack 100 including the main battery 110, and may serve as a BMS required for the battery pack. Furthermore, the control unit 200 may also serve to sense a current and control the main relay unit. Moreover, the control unit 200 may also serve as a converter control unit for controlling a DC-DC converter.

That is, the control unit 200 performs not only an operation of sensing voltage, current and temperature values, an operation of protecting a circuit on the basis of the sensed values and an operation of performing communication with the outside but also an operation of controlling the power conversion unit 120 for changing a level of a DC voltage.

Since a control unit for controlling state information of a battery and each element is implemented as the single main control unit 210, the number of sensors and circuits may be reduced by half in comparison with the related art.

Furthermore, the main control unit 210 controls the PWM controller 291 so that electric energy stored in the sub battery 60 is provided to a capacitor of an inverter and a capacitor of an electronic load via the power conversion unit 120 when the vehicle is started, thereby enabling precharge of the capacitors.

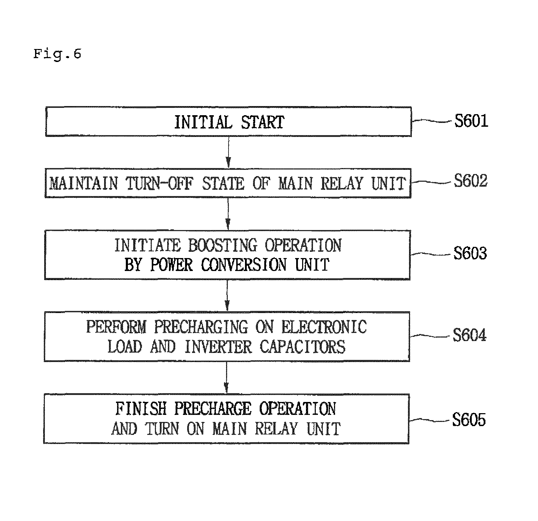

A method for performing precharging in a battery pack according to an embodiment will be described with reference to Fig. 6.

Fig. 6 is a flowchart illustrating a method for performing a precharge operation in a battery pack according to an embodiment.

When the vehicle is started (S610), the main control unit 210 maintains a turn-off state of the main relay unit 130 disposed between the main battery 110 and the power conversion unit 120 for a preset time (S602).

The main control unit 210 controls the PWM controller 291 and the gate driver 292 so that a boosting operation is performed by the power conversion unit 120 (S603). That is, since the power conversion unit 120 performs the boosting operation so that electric energy of the sub battery 60 is supplied to capacitors of an electronic load and an inverter, precharging is performed on the capacitors of the inverter and the electronic load connected to the power conversion unit 120 (S604).

The main relay unit 130 is turned on after voltages of the capacitors of the electronic load and the inverter are increased to a preset voltage level, so that the main battery 110 is electrically connected to the power conversion unit 120 (S605).

Through this process, a rapid flow of a high current into a vehicle, which occurs if the main battery is connected while the capacitors of the electronic load and the inverter are not charged, may be prevented. Furthermore, it is not necessary to additionally configure a precharge resistor and a precharge relay circuit for a precharge operation.

That is, by virtue of the integrated control unit according to an embodiment, the number of circuits and sensors required for a vehicle may be reduced, and stable battery operation may be ensured.

By virtue of the embodiments of the present disclosure, a unit for monitoring and controlling a battery system of a vehicle may be integrated into a single element in a battery pack.

Furthermore, since a control unit for controlling state information of a battery and each element is implemented as a single element in the battery pack, the number of sensors and circuits may be reduced by half in comparison with the related art. By virtue of such a configuration, it is not necessary to individually configure cooling structures for cooling a BMS and a DC-DC converter.

Moreover, by virtue of the single-integrated control unit, a precharge operation may be performed to prevent a high current that may be generated when a vehicle is started, so that it is not necessary to additionally configure a precharge resistor and a precharge relay circuit for precharge.

That is, the number of circuits and sensors required for a vehicle may be reduced, and stable battery operation may be ensured.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A battery pack comprising:
a main battery (110) comprising a plurality of battery cells;
a power conversion unit (120) configured to change a level of a voltage output from the main battery (110);
a main relay unit (130) disposed between the main battery and the power conversion unit, the main relay unit switching a connection between the main battery and the power conversion unit; and
a control unit (200) configured to monitor a state of the main battery and control operation of the power conversion unit,
wherein the control unit (200) comprises units for measuring voltage, current and temperature values of the main battery and a unit for outputting a gate signal for controlling the operation of the power conversion unit.

2. The battery pack according to claim 1, wherein the control unit (200) comprises a main control unit (210), a cell balancing unit (220) for reducing a voltage deviation between the battery cells, a cell sensing management unit (230) for receiving and digital-converting voltage and current values of the battery cells and the main battery, a temperature sensing unit (260) for measuring temperatures of the battery cells and the main battery, a communication unit (270) for performing CAN communication, and a gate driver (292) for outputting the gate signal for commanding the operation of the power conversion unit according to control by the main control unit (210).

3. The battery pack according to claim 2, wherein the control unit (200) comprises an input/output sensing unit (240) for sensing an output voltage and an output current of the main battery, a protecting unit (250) constituting a protection circuit according to a measurement value of the input/output sensing unit (240), and a PWM controller (291) for transferring a PWM duty ratio to the gate driver (292).

4. The battery pack according to claim 2, wherein the control unit (200) comprises a control power unit( 280) for supplying power to the cell balancing unit (220), the cell sensing management unit (230), the temperature sensing unit (260), the communication unit (270) and the gate driver (292).

5. The battery pack according to claim 1, wherein the control unit(200) controls the main relay unit (130) so that an interval in which the main relay unit (130) is turned off is formed when a vehicle is started.

6. The battery pack according to claim 1, wherein the control unit (200) controls the power conversion unit (120) so that a precharge operation of a capacitor connected to the power conversion unit (120) is performed.

7. A hybrid vehicle comprising:
a main battery (110);
an inverter (30) configured to operate as a generator or collect and energy-convert regenerative braking energy generated from an engine of the vehicle so that the main battery (110) is charged according to a driving state of the vehicle;
a power conversion unit (120) configured to provide power to a first electronic load that is a high-capacity load element among electronic loads, and connected to the main battery (110) and the inverter (30) ;
a sub battery (60) connected to the power conversion unit (120), and configured to provide power to a second electronic load that is a standard-capacity load element among the electronic loads;
a control unit( 200) configured to monitor a state of the main battery (110) and control operation of the power conversion unit (120); and
a main relay unit (130) disposed between the main battery (110) and the power conversion unit (120), and configured to selectively connect the main battery (110) to the power conversion unit (120) according to control by the control unit (200),
wherein, in order to precharge a capacitor disposed in the first electronic load or the inverter (30), the control unit (200) controls the power conversion unit (120) so that power of the sub battery (60) is provided to the capacitor.

8. The hybrid vehicle according to claim 7, wherein the control unit (200) comprises units for measuring voltage, current and temperature values of the main battery (110), and a unit for outputting a gate signal for controlling the operation of the power conversion unit.

9. The hybrid vehicle according to claim 7, wherein the control unit (200) comprises a main control unit (210), a cell balancing unit (220) for reducing a voltage deviation between the battery cells, a cell sensing management unit (230) for receiving and digital-converting voltage and current values of the battery cells and the main battery (110), a temperature sensing unit (260) for measuring temperatures of the battery cells and the main battery, a communication unit (270) for performing CAN communication, and a gate driver (292) for outputting the gate signal for commanding the operation of the power conversion unit (120) according to control by the main control unit (210).

10. The hybrid vehicle according to claim 9, wherein the control unit (200) comprises an input/output sensing unit (240) for sensing an output voltage and an output current of the main battery (110), a protecting unit (250) constituting a protection circuit according to a measurement value of the input/output sensing unit (240), and a PWM controller (291) for transferring a PWM duty ratio to the gate driver (292).

11. The hybrid vehicle according to claim 10, wherein the control unit (200) comprises a control power unit (280) for supplying power to the cell balancing unit (220), the cell sensing management unit (230), the temperature sensing unit (260), the communication unit (270) and the gate driver (292).
